(19) Europäisches Patentamt
European Patent Office
Office européen des brevets

(11) EP 4 763 634 A1

(12) EUROPÄISCHE PATENTANMELDUNG

(43) Veröffentlichungstag:
24.06.2026 Patentblatt 2026/26

(21) Anmeldenummer: 24221755.2

(22) Anmeldetag: 19.12.2024

(51) Internationale Patentklassifikation (IPC):
*B60T 7/12* (2006.01)     *B60T 8/17* (2006.01)
*B60T 8/172* (2006.01)     *B60T 8/174* (2006.01)
*B60T 8/32* (2006.01)

(52) Gemeinsame Patentklassifikation (CPC):
**B60T 8/321; B60T 7/12; B60T 8/1705; B60T 8/172;
B60T 8/174; B60T 8/3235; B60T 8/3275;**
B60T 2201/02; B60T 2201/04; B60T 2201/16;
B60T 2210/12; B60T 2210/20; B60T 2210/36;
B60T 2230/04; B60T 2250/04

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Siemens Mobility GmbH**
**80997 München (DE)**

(72) Erfinder:
• **Eleftheriadis, Eleftherios**
**10245 Berlin (DE)**
• **Fruhnert, Michael**
**12437 Berlin (DE)**

(74) Vertreter: **Siemens Patent Attorneys**
**Postfach 22 16 34**
**80506 München (DE)**

(54) **VERFAHREN ZUM STEUERN EINES FAHRZEUGS ZUM ERREICHEN EINES BREMSZIELPUNKTES**

(57)     Die Erfindung umfasst ein Verfahren zum Steuern eines Fahrzeugs (FZ), bei dem für eine vorgegebene Zielgeschwindigkeit in einem vorgegebenen Bremszielpunkt (VBP) das Erreichen eines Bremseinsatzpunktes rechnergestützt unter Berücksichtigung von Beschränkungen im Ort und Beschränkungen in der Zeit bestimmt wird. Das Fahrzeug (FZ) wird derart gesteuert, dass dieses bei Erreichen des vorgegebenen Bremseinsatzpunktes in einem Bremsvorgang bis zum Erreichen der vorgegebenen Zielgeschwindigkeit abgebremst wird. Wiederholt werden die beiden folgenden Schritte durchgeführt: Rechnergestützt wird ein momentan erreichbarer Bremszielpunkt (MBP) unter Berücksichtigung der Beschränkungen im Ort und Beschränkungen in der Zeit bestimmt. Danach wird rechnergestützt das Erreichen des Bremseinsatzpunktes bestimmt, indem geprüft wird, ob der momentan erreichbare Bremszielpunkt (MBP) dem vorgegebenen Bremszielpunkt (VBP) entspricht. Sobald der momentan erreichbare Bremszielpunkt (MBP) dem vorgegebenen Bremszielpunkt (VBP) entspricht, wird Schritt b) eingeleitet. Ferner sind ein Fahrzeug, ein Computerprogrammprodukt sowie ein computerlesbares Speichermedium umfasst.

FIG 3

EP 4 763 634 A1

**Beschreibung**

Technisches Gebiet

Von der Erfindung ist ein Verfahren zum Steuern eines Fahrzeugs umfasst. Ferner ist von der Erfindung ein Fahrzeug mit einer fahrzeugseitigen Rechenumgebung umfasst. Ferner ist von der Erfindung ein Computerprogrammprodukt, enthaltend Programmbefehle, umfasst. Ferner ist von der Erfindung ein computerlesbares Speichermedium, enthaltend Daten, umfasst.

Technischer Hintergrund

Gemäß dem Stand der Technik ist es bekannt, dass für das autonome Fahren Bremskurven berechnet werden müssen, damit ein autonom fahrendes Fahrzeug an einem vorgesehenen Ort zum Stehen kommt oder bis zu diesem Ort auf eine bestimmte Geschwindigkeit verzögert wird. Autonomes Fahren kann in an sich bekannter Weise in unterschiedlichen Automatisierungsgraden (auch Grade of Automation, kurz GOA genannt) durchgeführt werden. Hierbei werden die Stufen von 0 - 4 unterschieden, wobei der Grad der Automatisierung steigt, je höher die betreffende Stufe ist. Autonom fahrende Fahrzeuge können Straßenfahrzeuge oder auch spurgeführte Fahrzeuge wie beispielsweise Schienenfahrzeuge sein.

Um Bremskurven zu berechnen, werden üblicherweise Bewegungsgleichungen verwendet, die die Abhängigkeiten des sich bewegenden Fahrzeugs vom Ort und von der Zeit beschreiben. Außerdem gibt es Beschränkungen in der Zeit und Beschränkungen im Ort (kurz Beschränkungen im Ort und in der Zeit) zu berücksichtigen, die von den jeweiligen Betriebsbedingungen abhängen. Als Beschränkung im Ort ist beispielsweise die Eigenschaft des örtlichen Untergrundes zu verstehen, als Beschränkung in der Zeit beispielsweise Grenzen hinsichtlich der Geschwindigkeit, des Bremsvermögens und des Beschleunigungsvermögens. Außerdem gibt es auch Leistungsbeschränkungen im Netz (zu bestimmten Zeiten) um Lastspitzen bei parallel anfahrenden Zügen zu vermeiden. Würden jeweils nur Beschränkungen in der Zeit oder Beschränkungen im Ort vorliegen, könnte das Problem der Beschreibung des Bremsverhaltens grundsätzlich analytisch gelöst werden.

In der Realität treten jedoch Beschränkungen im Ort und in der Zeit auf, weswegen analytische Verfahren für eine ganzheitliche Lösung versagen, wenn die Einflussgrößen vom Ort und der Zeit gleichzeitig abhängig sind. In diesen Fällen werden Abhängigkeiten aufgelöst, indem für einen Teil der Größen Annahmen gemacht werden und die Bewegungsgleichung unter diesen Voraussetzungen gelöst wird. Ob die dann berechnete Lösung das vorliegende Problem hinreichend gut löst, muss anschließend geprüft werden. Wenn dies nicht der Fall ist, müssen die Vorgaben geändert werden. Hierdurch entstehen mehrere Iterationen für die Problemlösung (beispielsweise Auffinden der optimalen Bremskurve) die einen beträchtlichen Bedarf an Rechenkapazität und Rechenzeit haben können.

Zusammenfassung der Erfindung

Die Aufgabe der Erfindung besteht darin, die beschriebenen Probleme im Stand der Technik zu beheben. Insbesondere ist es Aufgabe, ein Verfahren zum Steuern eines Fahrzeugs anzugeben, mit dem sich das Bremsverhalten des Fahrzeugs mit möglichst geringem Bedarf an Rechenkapazität und Rechenzeit berechnen lässt, sodass insbesondere Berechnungen im laufenden Betrieb des Fahrzeugs durchgeführt werden können, wobei die Ergebnisse rechtzeitig zur Steuerung des Fahrzeugs zur Verfügung gestellt werden können. Weiterhin ist es Aufgabe der Erfindung, ein Fahrzeug, ein Computerprogrammprodukt und ein computerlesbares Speichermedium anzugeben, mit dem das verbesserte Verfahren durchführbar ist.

Beschrieben wird gemäß einem ersten Aspekt der Erfindung ein Verfahren zum Steuern eines Fahrzeugs, bei dem

a) für eine vorgegebene Zielgeschwindigkeit in einem vorgegebenen Bremszielpunkt das Erreichen eines Bremseinsatzpunktes rechnergestützt unter Berücksichtigung von Beschränkungen im Ort und Beschränkungen in der Zeit (unter Zugrundelegung z. B. einer Bewegungsgleichung) bestimmt wird,
b) das Fahrzeug derart gesteuert wird, dass dieses bei Erreichen des vorgegebenen Bremseinsatzpunktes in einem Bremsvorgang bis zum Erreichen der vorgegebenen Zielgeschwindigkeit abgebremst wird.

Für das gemäß diesem Aspekt der Erfindung rechnergestützt zu lösende Bremsproblem ist es also notwendig, eine vorgegebene Geschwindigkeit in einem vorgegebenen Bremszielpunkt zu kennen, dieser kann sich beispielsweise aus einem Fahrplan für den Bahnverkehr ergeben oder aus einer Analyse der momentanen Verkehrssituation (letzteres auch bei einem autonom fahrenden Straßenfahrzeug, beispielsweise eine rote Ampel). Die vorgegebene Geschwindigkeit kann größer null sein (beispielsweise um ein Auffahren auf ein vorausfahrendes Fahrzeug zu verhindern, Langsamfahrstellen sind auch zur Vermeidung von Lärm bzw. Reduktion von Gefahren vorgesehen) oder gleich null sein (beispielsweise aufgrund eines erforderlichen Halts an einem Bahnhof oder einem anderen Haltepunkt). Der Bremszielpunkt ist der Punkt, an dem die vorgegebene Zielgeschwindigkeit erreicht wird.

Rechnergestützt oder computerimplementiert ist eine Vorrichtung, wenn diese mindestens einen Computer oder Prozessor aufweist, oder ein Verfahren, wenn mindestens ein Computer oder Prozessor mindestens einen Verfahrensschritt des Verfahrens ausführt.

Eine Rechenumgebung ist eine IT-Infrastruktur, bestehend aus Funktionskomponenten wie Prozessoren, Speichereinheiten, Programmen und aus mit den Programmen zu verarbeitenden Daten, die zur Ausführung mindestens einer Applikation, die eine Aufgabe zu erfüllen hat, verwendet werden. Weitere Funktionskomponenten können aus Sensoren und Aktuatoren bestehen, welche eine Interaktion der Rechenumgebung mit der Außenwelt ermöglichen. Die IT-Infrastruktur kann auch als Netzwerk der genannten Funktionskomponenten organisiert sein.

Recheninstanzen bilden innerhalb einer Rechenumgebung funktionale Einheiten aus, die Applikationen (gegeben beispielsweise durch eine Anzahl von Programmmodulen) zugeordnet werden können und diese ausführen können. Diese funktionalen Einheiten bilden bei der Ausführung der Applikation physikalisch (beispielsweise Computer, Prozessor) und/oder virtuell (beispielsweise Programmmodul) in sich geschlossene Systeme.

Computer sind aus mehreren Funktionskomponenten bestehende elektronische Geräte mit Datenverarbeitungseigenschaften. Computer können beispielsweise Clients, Server, Handheld-Computer, Kommunikationsgeräte und andere elektronische Geräte zur Datenverarbeitung sein, die Prozessoren und Speichereinheiten aufweisen können und über Schnittstellen auch zu einem Netzwerk zusammengeschlossen sein können.

Prozessoren können beispielsweise Wandler, Sensoren zur Erzeugung von Messsignalen oder elektronische Schaltungen sein. Bei einem Prozessor kann es sich um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen und Daten handeln. Auch kann unter einem Prozessor ein virtualisierter Prozessor oder eine Soft-CPU verstanden werden.

Speichereinrichtungen können als computerlesbarer Speicher in Form eines Arbeitsspeichers (engl. Random-Access Memory, RAM) oder Datenspeichers (Festplatte oder Datenträger) ausgeführt sein.

Programmmodule sind einzelne Software-Funktionseinheiten, die einen erfindungsgemäßen Programmablauf von Verfahrensschritten ermöglichen. Diese Software-Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Schnittstellen können hardwaretechnisch, beispielsweise kabelgebunden oder als Funkverbindung, oder softwaretechnisch, beispielsweise als Interaktion zwischen einzelnen Programmmodulen eines oder mehrerer Computerprogramme, realisiert sein.

Zur Vermeidung von Missverständnissen sei an dieser Stelle angemerkt, dass einzelne Anspruchsmerkmale mit kleinen lateinischen Buchstaben durchnummeriert werden, ohne dass dabei Rücksicht auf die Anspruchsnummerierung genommen wird. Dies bedeutet, dass jeder Buchstabe im gesamten Anspruchssatz nur einmal vorkommt, was eine eindeutige Adressierung der betreffenden Anspruchsmerkmale ohne Nennung der Anspruchsnummer ermöglicht. Deswegen kommt der Reihenfolge der Buchstaben jedoch keine Bedeutung zu.

Erfindungsgemäß ist vorgesehen,
dass wiederholt die beiden folgenden Schritte durchgeführt werden, dass

c) rechnergestützt ein momentan erreichbarer Bremszielpunkt unter Berücksichtigung der Beschränkungen im Ort und Beschränkungen in der Zeit bestimmt wird,

d) danach rechnergestützt das Erreichen des Bremseinsatzpunktes bestimmt wird, indem geprüft wird, ob der momentan erreichbare Bremszielpunkt dem vorgegebenen Bremszielpunkt entspricht, (an dem das Fahrzeug eine bestimmte Geschwindigkeit erreicht haben soll oder zum Stillstand kommen, d. h. eine Geschwindigkeit gleich null erreicht haben soll,)

e) und dass, sobald der momentan erreichbare Bremszielpunkt dem vorgegebenen Bremszielpunkt entspricht, Schritt b) eingeleitet wird.

Die erfindungsgemäße Lehre besteht darin, dass von dem klassischen Ansatz einer Lösung der Bewegungsgleichung für die Zukunft (nach dem Stand der Technik) bewusst abgewichen wird. Dieser klassische Ansatz versucht vorherzusehen, wann und mit welchen Bremsparametern eine Bremsung demnächst erfolgen soll. Hierzu sind, wie eingangs bereits erwähnt, aufgrund der Beschränkungen im Ort und in der Zeit und der damit verbundenen gegenseitigen Abhängigkeiten Iterationen zu durchlaufen, um eine möglichst optimale Lösung für das betreffende Bremsproblem aufzufinden. Dabei muss die Lösung aufgefunden worden sein, bevor die betreffende Bremsung ausgelöst werden muss. Somit handelt es sich um einen Wettlauf gegen die Zeit, der nicht immer zu dem Ergebnis führt, dass der optimale Bremsvorgang rechtzeitig berechnet wird.

Hierzu ist zu bemerken, dass selbstverständlich eine die Betriebssicherheit gewährleisten Bremsung aufgrund des Zusammenwirkens verschiedener Steuerungsfunktionen des Fahrzeugs jederzeit gewährleistet ist. Nur handelt es sich dann eventuell nicht um die optimale Lösung. Kriterien, die es bei der Lösung zu optimieren gilt, können beispielsweise der Energieverbrauch des Fahrzeugs und die körperliche Belastung der Fahrgäste sein. Mit anderen Worten sollte eine Bremsung möglichst früh erfolgen, um die auftretenden Bremsbeschleunigungswerte gering zu halten und die Möglichkeit beispielsweise einer Energierückgewinnung durch Einsatz der Motorbremse optimal auszuschöpfen.

Der erfindungsgemäße Ansatz weicht von der klassischen Lösung durch die wiederholte und damit abwechselnde Durchführung der oben genannten Schritte c) und d) ab. Demgemäß wird nur berechnet, welcher Bremszielpunkt unter Berücksichtigung der Beschränkungen im Ort und Beschränkungen in der Zeit (kurz als Beschränkungen im Ort und in der Zeit bezeichnet) momentan erreicht werden kann. Hierdurch wird die Zahl der zu lösenden Variablen der Bewegungsgleichung verringert, sodass das Ergebnis dieses Problems ohne Iterationen berechnet werden kann. Anschließend wird lediglich geprüft, ob der momentan erreichbare Bremszielpunkt gerade dem vorgegebenen Bremszielpunkt entspricht. Wenn dies der Fall ist, ist das Problem so gut wie unter den momentanen Voraussetzungen möglich gelöst und der Bremsvorgang muss sofort eingeleitet werden. Ist dies jedoch nicht der Fall verbleibt noch ein (nach diesem Ansatz unbekannter) Zeitraum bis zur Bremsung, so dass der Schritt c) in einem nächsten Zyklus wiederholt werden kann.

Mit anderen Worten verfolgt der erfindungsgemäße Ansatz nicht die Frage, wann (unter gewöhnlichen Umständen in der Zukunft liegend) mit dem Bremsen begonnen werden muss, sondern nur, ob in diesem Augenblick mit dem Bremsen begonnen werden muss, um unter Berücksichtigung der Beschränkungen im Ort und in der Zeit den geforderten Bremszielpunkt mit der vorgegebenen Zielgeschwindigkeit zu erreichen. Da die Schritte c) und d) ständig wiederholt werden, wird dabei der Bremseinsatzpunkt nicht (oder unter Berücksichtigung der realen, erfindungsgemäß vergleichsweise kurzen Rechenzeiten zumindest nur in für den sicheren Betrieb des Fahrzeugs nicht wesentlichen Maße) verpasst.

Der Vorteil der Erfindung besteht darin, dass die Lösung des Problems wegen des lediglich einmaligen Durchlaufens der Berechnung pro Zyklus zur Lösung der Bewegungsgleichung in bedeutend kürzerer Zeit erfolgen kann. Statt zur Lösung des Problems mehrere Iterationen durchzuführen, wird erfindungsgemäß die Lösung des Problems nur für den Augenblick (und deshalb sehr schnell) durchgeführt und dafür die Lösung des Problems für die nachfolgenden Augenblicke (dies bedeutet in Zeitintervallen, die mindestens so lang wie die benötigte Rechenzeit sind) ständig wiederholt. Hierbei handelt es sich somit nicht um Iterationen zur Lösung des Problems, sondern um wiederholte Problemlösungen, bis der unter den Beschränkungen von Ort und Zeit geltende optimale Bremseinsatzpunkt tatsächlich erreicht ist. Vorteilhaft kann dieses Verfahren daher im laufenden Betrieb, also während der Fahrt des Fahrzeugs angewendet werden und liefert dennoch immer rechtzeitig die unter den geltenden Bedingungen optimierte Lösung des Problems.

Beschrieben wird gemäß einem weiteren Aspekt der Erfindung ein Fahrzeug mit einer fahrzeugseitigen Rechenumgebung zur Steuerung des Fahrzeugs. Gemäß diesem Aspekt ist erfindungsgemäß vorgesehen, dass die Rechenumgebung dazu eingerichtet ist, zumindest die Schritte a), c), und d) des Verfahrens durchzuführen. Die mit diesem Aspekt der Erfindung verbundenen Vorteile sind vorstehend bereits erläutert worden, wobei auf diese Vorteile verwiesen wird.

Beschrieben wird gemäß einem weiteren Aspekt der Erfindung ein Computerprogrammprodukt, enthaltend Programmbefehle, die durch eine Rechenumgebung ausführbar sind. Gemäß diesem Aspekt ist erfindungsgemäß vorgesehen, dass zumindest die Schritte a), c) und d) des Verfahrens ausgeführt werden.

Gemäß der Erfindung wird somit ein Programmmodule enthaltendes Computerprogrammprodukt mit Programmbefehlen beschrieben, wobei die Programmmodule in derselben Recheninstanz oder mehreren Recheninstanzen der Rechenumgebung laufen können. Mittels des Computerprogrammproduktes, das ein Computerprogramm oder mehrere Computerprogramme umfassen kann, sind jeweils das erfindungsgemäße Verfahren und/oder dessen Ausführungsbeispiele ausführbar und mit der Ausführung werden die vorstehend beschriebenen Vorteile erreicht.

Beschrieben wird gemäß einem weiteren Aspekt der Erfindung ein computerlesbares Speichermedium, enthaltend Daten, welche als Datensätze vom Speichermedium gespeichert werden. Gemäß diesem Aspekt ist erfindungsgemäß vorgesehen, dass die Datensätze das vorstehend beschriebene Computerprogrammprodukt nach dem letzten voranstehenden Anspruch ausführbar machen.

Darüber hinaus wird somit eine Bereitstellungsvorrichtung zum Speichern und/oder Bereitstellen des Computerprogramms in Form eines computerlesbaren Speichermediums beschrieben. Die Bereitstellungsvorrichtung ist beispielsweise eine Speichereinheit, die das Computerprogramm speichert und zum Abruf bereitstellt. Alternativ oder zusätzlich ist die Bereitstellungsvorrichtung ein Netzwerkdienst, ein Computersystem, ein Serversystem, insbesondere ein verteiltes, beispielsweise cloudbasiertes Computersystem oder virtuelles Rechnersystem, welches das Computerprogramm auf einem computerlesbaren Speichermedium speichert und vorzugsweise in Form eines Datenstroms bereitstellt.

Die Bereitstellung erfolgt in Form von Programmmodule beschreibenden Programmdatensätzen als Datei, insbesondere als Downloaddatei, oder als Datenstrom, insbesondere als Downloaddatenstrom, des Computerprogrammproduktes. Das Computerprogrammprodukt wird beispielsweise unter Verwendung der Bereitstellungsvorrichtung in eine Rechenumgebung übertragen, sodass das erfindungsgemäße Verfahren in einer Recheninstanz oder mehreren Recheninstanzen dieser Rechenumgebung zur Ausführung gebracht werden kann.

Ausgestaltungen der Erfindung

Weiterbildungen der Erfindung beschreibende Varianten werden nachfolgend ohne Beschränkung des grundlegenden Gedankens der Erfindung erläutert.

Gemäß einer Variante sind die oben erklärten Aspekte der Erfindung dadurch bestimmt, dass im Schritt c) gemäß Anspruch 1 der momentan erreichbare Bremszielpunkt anhand einer aus dem Weg-Zeit-Gesetz abgeleiteten Bewegungsgleichung für das Fahrzeug berechnet wird.

Kurz gesagt wird der Berechnung die Bewegungsgleichung zugrunde gelegt. Dadurch wird ein mathematisch präzises Modell genutzt, um die dynamischen Eigenschaften des Fahrzeugs in die Berechnung des Bremsverhaltens einzubeziehen. Insbesondere können in der Bewegungsgleichung auch die Beschränkungen im Ort und in Zeit berücksichtigt werden. Dies stellt sicher, dass nicht nur die physikalischen Eigenschaften des Fahrzeugs, sondern auch externe Faktoren und Beschränkungen, wie Geschwindigkeitsbegrenzungen, Haftreibung oder Gleitreibung der Räder (Schlupf) oder spezifische geografische Gegebenheiten wie Gefälle und Steigungen sowie Leistungsbegrenzungen bei der Energieversorgung (Oberleitungen) in die Berechnungen einfließen. Dadurch kann die Sicherheit und Effizienz des autonomen Fahrens verbessert werden, da das Fahrzeug in der Lage ist, vorausschauend und konform zu den geltenden Regeln und Umgebungsbedingungen zu agieren.

Denkbar ist, dass die Bewegungsgleichung kontinuierlich aktualisiert wird, um auf Veränderungen in den Beschränkungen im Ort und in der Zeit reagieren zu können. Da das Verfahren ständig wiederholt wird, kann dieses dann immer mit der jeweils aktuell geltenden Bewegungsgleichung durchgeführt werden.

Denkbar ist, dass in Varianten des Verfahrens der Bremsgradient entsprechend den aktuellen Fahrbedingungen oder Fahrzeugparametern angepasst wird. So könnte beispielsweise der Bremsgradient bei unterschiedlichen Streckenverhältnissen oder Fahrzeuglasten variieren, um eine gute Näherung zur Berechnung der Verzögerung zu gewährleisten. Eine dynamische Anpassung des Bremsgradienten könnte durch zusätzliche Sensoren und eine erweiterte Rechenumgebung realisiert werden, die kontinuierlich die relevanten Umgebungs- und Fahrzeugparameter überwachen. Diese Sensoren sind beispielsweise in einer Bahn-Infrastruktur bereits vorhanden, sodass diese ohne konstruktiven Mehraufwand verwendet werden könnten.

Insgesamt bietet die Verwendung eines konstanten Bremsgradienten eine robuste und weniger fehleranfällige Grundlage für die Berechnung und Umsetzung von Bremsvorgängen, während Varianten mit variablen oder dynamischen Bremsgradienten zusätzliche Anpassungsmöglichkeiten und Optimierungen je nach spezifischen Anforderungskriterien bieten.

Gemäß einer Variante sind die oben erklärten Aspekte der Erfindung dadurch bestimmt, dass ein Summand, der einen beim Bremsvorgang auftretenden Ruck beschreibt, in der Bewegungsgleichung berücksichtigt wird.

Die Berücksichtigung eines solchen Summanden ermöglicht eine genauere Modellierung der Fahrzeugdynamik insbesondere zu Beginn und am Ende des Bremsvorgangs oder bei sprunghafter Veränderung der Bremsleistung und der damit verbunden Verzögerungswerte. Insbesondere sorgt dies dafür, dass der von Insassen des Fahrzeugs wahrgenommene Komfort erhöht wird, da abrupte und möglicherweise unangenehme Beschleunigungsänderungen minimiert werden können. Als Folge wird eine gleichmäßigere Verzögerung gewährleistet, was zu einem insgesamt angenehmeren Fahr- und Bremsverhalten führen kann, und auch das Material schont.

Denkbar ist, dass der Ruck in Form eines standardisierten mathematischen Terms in die Bewegungsgleichung integriert wird, welcher die zweite Ableitung der Geschwindigkeit über die Zeit darstellt. Dies kann besonders vorteilhaft sein, um die Bremsleistung betreffende Änderungen weicher zu gestalten und potenzielle Schäden oder übermäßigen Verschleiß an Fahrzeugkomponenten zu vermeiden.

Es kann auch vorgesehen sein, dass der Summand, der den Ruck beschreibt, dynamisch angepasst wird, basierend auf spezifischen Fahrsituationen und Fahrzeugtypen. Durch diese Anpassung kann die Steuerung des Fahrzeugs noch besser auf verschiedene Anwendungsfälle des Verfahrens (beispielsweise in Bezug auf unterschiedliche Fahrzeuge oder unterschiedliche Umgebungen) angepasst werden, wodurch sowohl die Effizienz der Bremsleistung als auch der Fahrkomfort verbessert werden.

Insgesamt ermöglicht die Berücksichtigung eines Ruck-Summanden in der Bewegungsgleichung eine genauere und anpassungsfähige Steuerung des Fahrzeugs, was zu einem sichereren, komfortableren und ressourcenschonenderen Fahrverhalten führt.

Gemäß einer Variante sind die oben erklärten Aspekte der Erfindung dadurch bestimmt, dass als Beschränkung im Ort eine maximale Haftung der Räder des Fahrzeugs auf dem Untergrund und/oder ein Widerstandsgradient für die Bewegung des Fahrzeugs berücksichtigt wird.

Dabei besteht der Vorteil bei der Berücksichtigung der maximalen Haftung darin, dass auf diese Weise ein sicherer und stabiler Bremsvorgang gewährleistet werden kann, da die Haftung der Räder auf dem Untergrund entscheidend für die genaue und verlässliche Steuerung der Verzögerung des Fahrzeugs ist. Die maximale Haftung kann durch verschiedene Parameter, vorzugsweise den Reibungskoeffizienten zwischen Rädern und Untergrund (z. B. Radreifen - Schiene) bestimmt werden.

Des Weiteren kann vorgesehen sein, dass als Beschränkung im Ort ein Widerstandsgradient für die Bewegung des Fahrzeugs berücksichtigt wird. Hier ergibt sich der Vorteil, dass durch die Berücksichtigung des Widerstandsgradienten (der durch Faktoren wie Steigungen, Gefälle, Kurven und/oder Luftwiderstand berücksichtigt werden kann) eine präzisere Anpassung des berechneten Bremsverhaltens erfolgt. Dadurch wird gewährleistet, dass das Fahrzeug auch in wechselnden topografischen Bedingungen zuverlässig zum Stehen kommt oder seine Geschwindigkeit exakt reguliert wird. Denkbar ist, dass der Widerstand durch Sensordaten in Echtzeit ermittelt und in die Steueralgorithmen integriert wird, um eine kontinuierliche Anpassung der Bremsstrategie entsprechend den aktuellen Fahrbedingungen zu ermöglichen oder dass für diesen Erfahrungswerte zur Verfügung gestellt werden.

Gemäß einer Variante sind die oben erklärten Aspekte der Erfindung dadurch bestimmt, dass als Beschränkung in der Zeit eine maximal mögliche Leistung bei der Rückspeisung von Energie oder beim Bremsen (im Folgenden kurz als Bremsleistung bezeichnet) des Fahrzeugs berücksichtigt wird.

Dies hat den Vorteil, dass die Berechnungen für die Steuerungsprozesse des Fahrzeugs realitätsnäher durchgeführt werden können, da alle Faktoren, die die Bremsleistung beeinflussen, wie Fahrzeuggewicht, Straßenzustand oder Reifenqualität, in die Berechnungen einbezogen werden. Alternativ kann vorgesehen sein, dass zusätzliche Sicherheitsmargen in die Beschränkungen in der Zeit einfließen, um eine evtl. Bewertungsunsicherheit zu kompensieren. Denkbar ist auch, dass die maximal mögliche Bremsleistung zeitabhängig angepasst wird, basierend auf Echtzeitdaten von Sensoren und anderen Überwachungssystemen im Fahrzeug oder dessen Umgebung (berücksichtigend beispielsweise das Wettergeschehen an der Strecke oder den Verschleißzustand der Bremsen).

Gemäß einer Variante sind die oben erklärten Aspekte der Erfindung dadurch bestimmt, dass das Fahrzeug ein spurgeführtes Fahrzeug ist.

Ein spurgeführtes Fahrzeug bietet den Vorteil, dass es aufgrund seiner vorbestimmten Führung auf Schienen oder ähnlichen Spurvorrichtungen eine besser vorhersagbare Bewegung (beispielsweise ohne Spurwechsel) ermöglicht. Dies reduziert das Risiko von Abweichungen und erleichtert die Berechnung der Bremskurven.

Es ist denkbar, dass das spurgeführte Fahrzeug ein Schienenfahrzeug, wie beispielsweise ein Zug oder eine Straßenbahn, ist. Durch die feste Führung und den definierten Bewegungsweg des spurgeführten Fahrzeugs können zudem komplexe Steuerungsalgorithmen einfacher implementiert und optimiert werden. Dies verbessert die Zuverlässigkeit und Sicherheit des autonomen Fahrbetriebs im Vergleich zu Straßenfahrzeugen.

Exemplarische Ausführungsbeispiele der Zeichnung

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Varianten der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch mit den vorstehend beschriebenen Varianten der Erfindung kombinierbar.

Figur 1 zeigt ein Ausführungsbeispiel der erfindungsgemäßen Vorrichtung mit ihren Wirkzusammenhängen zwischen den zum Einsatz kommenden Funktionskomponenten schematisch.

Figur 2 zeigt ein Ausführungsbeispiel einer Rechenumgebung für die Vorrichtung gemäß Figur 1 als Blockschaltbild der einzelnen Funktionskomponenten und der zwischen diesen ausgebildeten Schnittstellen, wobei einzelne Recheninstanzen Programmmodule ausführen, die jeweils in einem oder mehreren der beispielhaft dargestellten Prozessoren ablaufen können und wobei die gezeigten Schnittstellen demgemäß softwaretechnisch in einem der Prozessoren oder hardwaretechnisch zwischen verschiedenen Prozessoren ausgeführt sein können.

Figur 3 zeigt ein Ausführungsbeispiel des erfindungsgemäßen Verfahrens als Flussdiagramm, wobei die gezeigten Verfahrensschritte einzeln oder in Gruppen durch Programmmodule verwirklicht sein können und wobei die Recheninstanzen und Schnittstellen gemäß Figur 2 beispielhaft angedeutet sind.

Detaillierte Beschreibung der Ausführungsbeispiele

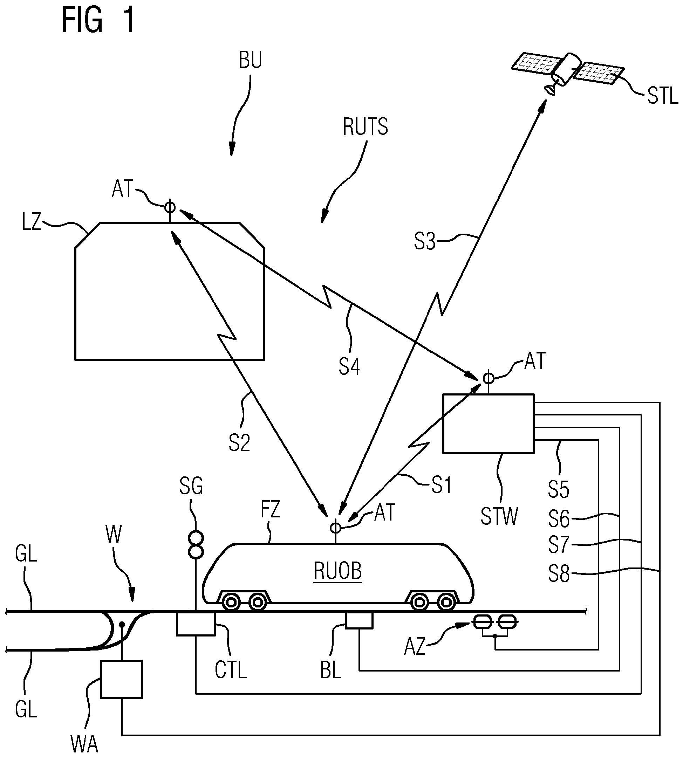

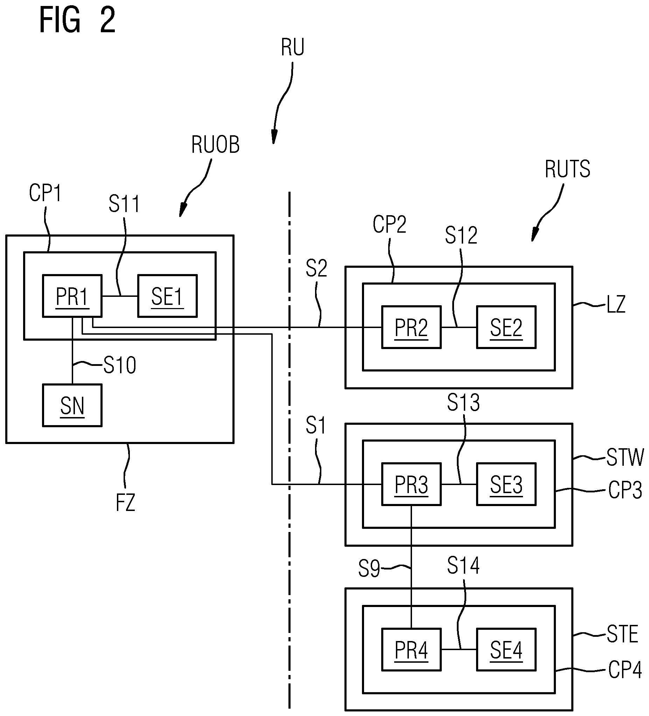

Die Figur 1 zeigt eine exemplarisch dargestellte Bahnumgebung BU, in der ein Zugbetrieb gesteuert werden und erfolgen kann. Ein Streckennetz ist exemplarisch durch ein Gleis GL dargestellt, auf dem sich ein Fahrzeug FZ befindet. Am Gleis GL sind im Folgenden noch näher erläuterte Streckenelemente STE (siehe Figur 2) vorgesehen, die eine streckenseitige Infrastruktur bilden. Das Fahrzeug FZ, ein Stellwerk STW und eine Leitzentrale LZ bilden eine Rechenumgebung RU aus. Mit Blick auf den Ablauf des Verfahrens, der rechnergestützt abläuft, werden diese auch als fahrzeugseitige Rechenumgebung RUOB und streckenseitige Rechenumgebung RUTS unterschieden (siehe Figur 2).

Die streckenseitige Rechenumgebung RUTS sowie die fahrzeugseitige Rechenumgebung RUOB, in denen das erfindungsgemäße Verfahren abläuft, kann einer gemeinsamen Betrachtung von Figur 1 und Figur 2 entnommen werden. Die zum Einsatz kommenden Recheninstanzen und Funktionskomponenten interagieren durch Schnittstellen miteinander. Durch eine erste Schnittstelle S1 sind das Fahrzeug FZ und das Stellwerk STW über Antennen AT miteinander verbunden. Durch eine zweite Schnittstelle S2 sind die Leitzentrale LZ und das Fahrzeug FZ über Antennen AT miteinander verbunden. Durch eine dritte Schnittstelle S3 sind das Fahrzeug FZ und ein Satellit STL zwecks Ortung mittels GNNS (z. B. GPS) miteinander verbunden. Durch eine vierte Schnittstelle S4 sind die Leitzentrale LZ und das Stellwerk STW miteinander verbunden. Mit anderen Worten sind die Leitzentrale LZ, das Stellwerk STW und das Fahrzeug FZ über Luftschnittstellen miteinander vernetzt und das Fahrzeug FZ kann sich mittels Satellitenunterstützung orten.

Das Stellwerk STW weist überdies Verbindungen zu den diversen Streckenelementen STE auf, um eine Steuerung der streckenseitigen Infrastruktur innerhalb der streckenseitigen Rechenumgebung RUTS durchführen zu können. Dies wird exemplarisch durch die folgenden Komponenten angedeutet (reale streckenseitige Infrastrukturen weisen selbstverständlich weitaus mehr Streckenelemente STE und auch zusätzlich andere Streckenelemente STE auf). Durch eine fünfte Schnittstelle S5 sind das Stellwerk STW und ein Achszähler AZ miteinander verbunden. Durch eine sechste Schnittstelle S6 sind das Stellwerk STW und eine Balise BL miteinander verbunden (falls es sich um eine Transparentdatenbalise handelt, bei einer Festdatenbalise entfällt die sechste Schnittstelle S6). Durch eine siebente Schnittstelle S7 sind das Stellwerk STW und ein Controller CTL (mit einem nicht dargestellten Prozessor) eines Lichtsignals SG miteinander verbunden. Durch eine achte Schnittstelle S8 sind das Stellwerk STW und ein Weichenantrieb WA miteinander verbunden.

Gemäß Figur 2 sind die jeweils Recheninstanzen bildenden Computer näher dargestellt. Das Fahrzeug FZ, die Leitzentrale LZ, das Stellwerk STW und ein Streckenelement STE, welches beispielsweise der Achszähler AZ, die Balise BL, der Controller CTL oder der Weichenantrieb WA gemäß Figur 1 oder auch ein anderes Streckenelement STE sein kann, sind in Figur 2 jeweils schematisch als Kästen dargestellt, die jeweils mindestens einen Computer umfassen. Selbstverständlich können die Aufgaben in den einzelnen Einheiten auch jeweils durch mehrere (nicht dargestellte) interagierende Computer bearbeitet werden.

Bei einem ersten Computer CP1 in der durch das Fahrzeug FZ gebildeten fahrzeugseitigen Rechenumgebung RUOB ist ein erster Prozessor PR1 mit einer ersten Speichereinheit SE1 durch eine elfte Schnittstelle S11 verbunden. Überdies ist exemplarisch ein Sensor SN (zum Beispiel ein Tachometer) in dem Fahrzeug FZ dargestellt, der über eine zehnte Schnittstelle S10 mit dem ersten Prozessor PR1 verbunden ist. In gleicher Weise können weitere nicht dargestellte Sensoren zum Einsatz kommen.

An der streckenseitigen Rechenumgebung RUTS sind mehrere Computer beteiligt. Bei einem zweiten Computer CP2 der Leitzentrale LZ ist ein zweiter Prozessor PR2 mit einer zweiten Speichereinheit SE2 durch eine zwölfte Schnittstelle S12 verbunden. Bei einem dritten Computer CP3 des Stellwerks STW ist ein dritter Prozessor PR3 mit einer dritten Speichereinheit SE3 durch eine 13. Schnittstelle S13 verbunden. Bei einem vierten Computer CP4 des Streckenelements STE ist ein vierter Prozessor PR4 mit einer vierten Speichereinheit SE4 durch eine 14. Schnittstelle S14 verbunden.

Ist im Rahmen dieser Erfindungsbeschreibung nur von Computern, Prozessoren, Speichereinheiten oder Schnittstellen die Rede, beziehen sich die Angaben allgemein auf alle der vorstehend im Einzelnen benannten Computer, Prozessoren, Speichereinheiten und weiteren Funktionskomponenten, die verbunden durch die Schnittstellen zur Bildung der besagten Rechenumgebung RU beitragen.

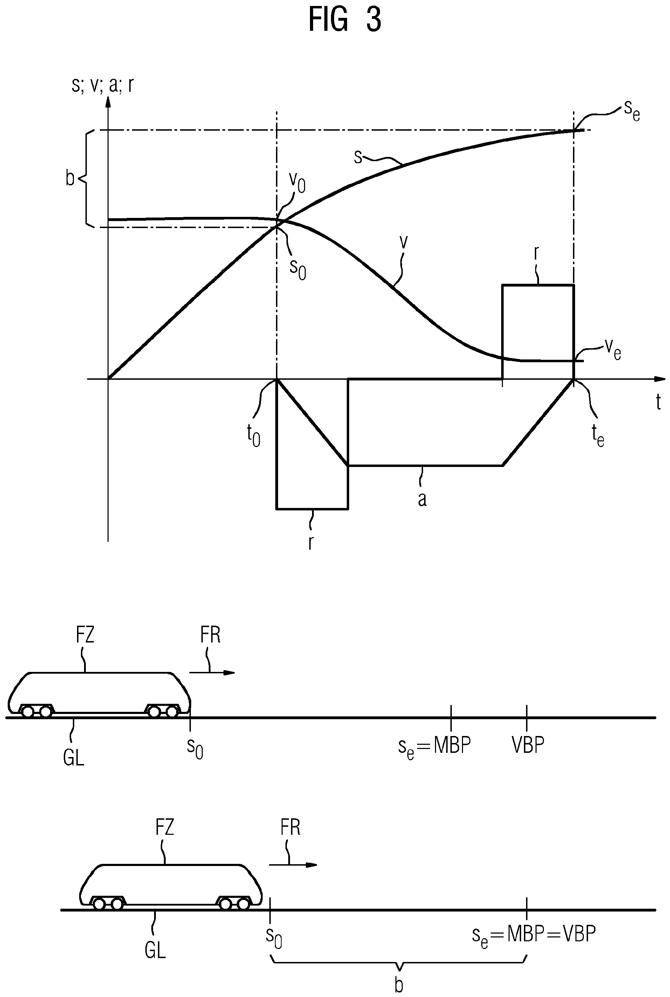

Figur 3 zeigt in einem Diagramm über der Zeit t (x-Achse) den Verlauf des Streckenzuwachses s, der Geschwindigkeit v, der Beschleunigung a und des Rucks r (y-Achse) des Fahrzeugs FZ, wie es im unteren Teil der Figur 3 dargestellt ist. Anders als in dem Diagramm s, v, a, r über t ist jedoch das Fahrzeug FZ in zwei Positionen auf dem Gleis GL dargestellt, wobei hierdurch eine Abhängigkeit vom Ort s angedeutet ist (nämlich der Position auf dem Gleis GL entsprechend der y-Achse des Diagramms). Um dies zu verdeutlichen, ist ein Bremsweg b sowohl in dem Diagramm als auch an dem Gleis GL eingezeichnet.

Die in dem Diagramm angedeuteten Abhängigkeiten des zeitlichen Verlaufes von Weg, Geschwindigkeit, Beschleunigung und Ruck werden durch die Lösung von Differenzialgleichungen, den sogenannten Bewegungsgleichungen wie folgt beschrieben:

$$s(t) = \int v\, dt \;,\; v(t) = \int a\, dt \;,\; a(t) = \int r\, dt \qquad (1)$$

mit

t Zeit
s Ort
v Geschwindigkeit
a Beschleunigung
r Ruck

Die Bewegungsgleichungen machen deutlich, dass zur Berechnung eines Bremszielpunktes, im Diagramm mit $s_r$ eingezeichnet, im Rahmen der Lösung der Bewegungsgleichungen Abhängigkeiten sowohl vom Ort als auch von der Zeit zu berücksichtigen sind. Weiterhin sind Beschränkungen im Ort und in der Zeit zu berücksichtigen, wie zum Beispiel eine maximal zulässige Geschwindigkeit, ein maximal zulässiger Ruck bzw. eine maximal zulässige Beschleunigung (hierbei geht es um die Bremsbeschleunigung). Auch der vorgegebene Bremszielpunkt VBP ist eine Beschränkung im Ort. Die geforderte Ankunftszeit an einem Bahnhof oder das Aufholen einer Verspätung des Fahrzeugs FZ stellen Beschränkungen in der Zeit dar. Weitere Beschränkungen im Ort und der Zeit sind dadurch gegeben, dass die Bremsleistung aufgrund der mechanischen Eigenschaften der Bremse und der elektrischen Eigenschaften einer Energierückspeisung nach oben begrenzt sind. Wie bereits erläutert, würde somit eine Vorhersage eines in Zukunft auf der Strecke vor dem Fahrzeug FZ liegenden Bremseinsatzpunktes, der sich aus dem vorgegebenen Bremszielpunkt VBP ergibt, eine iterative und damit für die Rechenleistung ressourcenintensive Berechnung erforderlich machen. Daher wird erfindungsgemäß der Berechnungsansatz gewählt, den momentan erreichbaren Bremszielpunkt MBP unter der Annahme auszurechnen, dass im Augenblick der Berechnung mit der Bremsung begonnen würde. Damit sind der Zeitpunkt für den Bremseinsatz to sowie der Bremseinsatzpunkt, im Diagramm mit so bezeichnet, vorgegeben. Die Lösung der Bewegungsgleichungen (1)._lässt sich für konstanten Ruck wie folgt vereinfachen:

$$s(t) = \frac{1}{6}\, r_\circ\, t_e^3 + \frac{1}{2}\, a_\circ\, t_e^2 + v_\circ t_e + s_\circ \quad (2)$$

mit

$t_0$ momentane Zeit
$s_0$ momentaner Ort
vo momentane Geschwindigkeit
ao momentane Beschleunigung
$r_0$ momentaner Ruck

Die momentanen Werte to, so, vo, ao, ro definieren die Anfangsbedingungen im Ort und in der Zeit, die erfindungsgemäß das zu lösende Berechnungsproblem stark vereinfachen. Dabei ist zu berücksichtigen, dass mit ao auch eine Beschleunigung aufgrund von Steigungen und Gefällen (vorgegeben durch das Streckenprofil der befahrenen Stecke) zu berücksichtigen ist. Außerdem ist zu berücksichtigen, dass die vereinfachte Lösung (2) der Bewegungsdifferenzialgleichungen einen momentanen Zustand beschreibt, der sich in der Folgezeit ändern kann. Daher ist die Lösung der Differenzialgleichungen unter diesen Voraussetzungen immer nur für hinreichend kleine Abschnitte der Strecke gültig. Zum momentan erreichbaren Bremszielpunkt hin sind somit mehrere solche Abschnitte zu berücksichtigen, für die die vereinfachte Lösung der Differenzialgleichungen angewendet wird. Die Lösungen, die man auf diese Weise erhält, sind dann zu einer Gesamtlösung zu addieren. Die Lösung wird somit in mehreren (kumulativen) Rechenschritten gefunden. Diese Rechenschritte führen allerdings direkt zur Lösung.

Demgegenüber kann bei der Lösung der Bewegungsgleichungen auf mehrere Iterationen (d. h. wiederholte Berechnung der Gesamtlösung) verzichtet werden. Vielmehr ergibt die Berechnung den momentan erreichbaren Bremszielpunkt MBP, der in dem Diagramm auch als s, bezeichnet wird. Diese Berechnung dauert nur einen Bruchteil im Vergleich zu einer iterativen Lösung des Problems für die Zukunft. Gelöst wird das Problem jedoch dann nur für die Gegenwart. Mit anderen Worten wird erfindungsgemäß die Frage gestellt und gelöst: Muss ich hier und sofort bremsen, um den vorgegebenen Bremszielpunkt VBP zu erreichen? - was mit genau einer Iteration zu lösen ist, also ist s = f ($s_0$, $v_0$, $a_0$, $r_0$)?

Für eine Fahrt mit konstanter Geschwindigkeit sind die momentane Beschleunigung und der momentane Ruck gleich null. Um die Berechnung zu beschleunigen, können diese Größen bei der Berechnung auch vereinfachend weggelassen werden. Hierdurch wird das Ergebnis ungenauer, sodass die Vereinfachung von den Anforderungen des betreffenden Anwendungsfalls abhängig gemacht werden muss. Hier ist ein Kompromiss zwischen erforderlicher Genauigkeit und geforderter Performance für die Rechengeschwindigkeit aufzufinden.

Die unteren beiden Darstellungen des Fahrzeugs FZ auf dem Gleis GL zeigen, dass es für die wiederholte Anwendung der Berechnung des momentan erreichbaren Bremszielpunkt MBP in jeweils einer Iteration zwei Fälle zu unterscheiden gibt. Oben ist der Fall dargestellt, dass der momentan erreichbare Bremszielpunkt MBP auf der Strecke noch vor dem vorgegebenen Bremszielpunkt VBP liegt. Daher muss also noch nicht gebremst werden (unter den bei der Berechnung berücksichtigen Bedingungen). Unten ist dargestellt, dass der momentan erreichbare Bremszielpunkt MBP dem vorgegebenen Bremszielpunkt VBP genau entspricht (oder - nicht dargestellt - mit Blick auf die in der einen Iteration verbrauchte Rechenzeit den vorgegebenen Bremszielpunkt VBP um einen technisch vertretbaren Betrag überschritten hat). Dies bedeutet, dass der Bremsvorgang sofort eingeleitet werden muss.

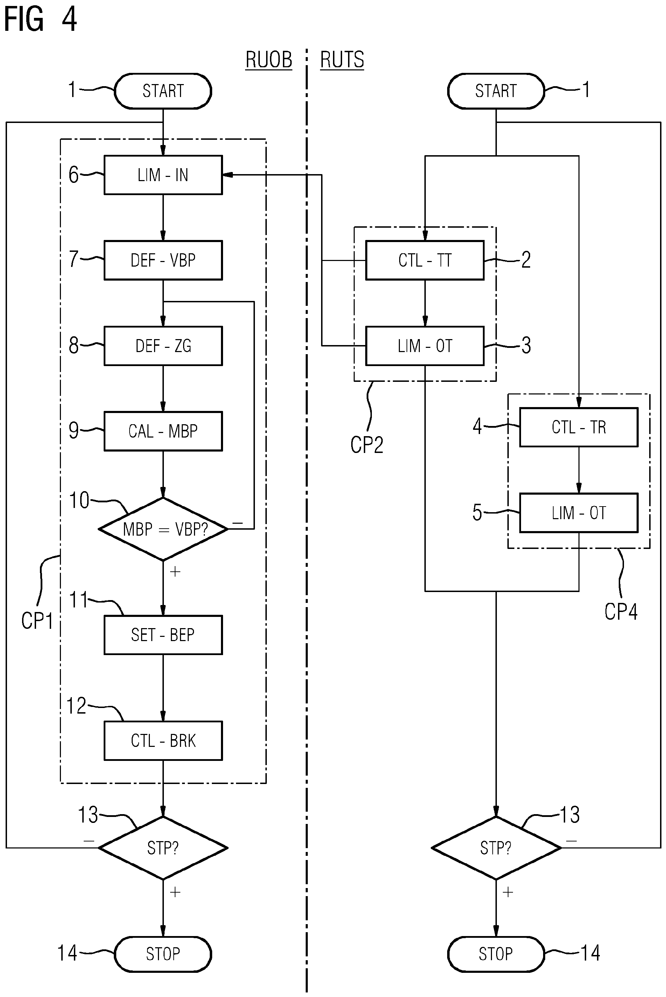

Im Folgenden soll das erfindungsgemäße Verfahren beispielhaft, wie im Flussdiagramm gemäß Figur 4 dargestellt, schrittweise erläutert werden. In Figur 4 ist außerdem beispielhaft durch Kästen angedeutet, in welchen Funktionskomponenten und Recheninstanzen gemäß Figur 1 und 2 die einzelnen Schritte durchgeführt werden können. Rechnergestützte Schritte erfolgen in den nicht näher dargestellten Prozessoren. Soweit hierbei die Schnittstellen gemäß Figur 1 und 2 genutzt werden, sind diese auch in Figur 4 gekennzeichnet.

In einem ersten Schritt 1 erfolgt der Start des Verfahrens (kurz: START). Wie in Figur 4 dargestellt, wird das Verfahren sowohl in der streckenseitigen Rechenumgebung RUTS als auch in der fahrzeugseitigen Rechenumgebung RUOB durchgeführt. Insbesondere das Vorgehen in der streckenseitigen Rechenumgebung RUTS ist an sich bekannt und daher in den folgenden Schritten 2 - 5 nur angedeutet.

In einem zweiten Schritt 2 erfolgt eine Überwachung und Steuerung des Fahrplans (kurz: CTL-TT). Ausgehend von einem Soll-Fahrplan, der den regulären Zugverkehr abbildet, werden Störungen im Ablauf des Fahrplans berücksichtigt und hieraus ein abgewandelter Ist-Fahrplan berechnet, der unter Berücksichtigung der Störungen ein möglichst geringes Aufkommen an Verspätungen für die am Zugverkehr beteiligten Fahrzeuge FZ (Züge) erzeugt.

In einem dritten Schritt 3 erfolgt die Ausgabe von Beschränkungen im Ort und in der Zeit, die durch den Ist-Fahrplan begründet werden. (kurz: LIM-OT). Beispielsweise kann es notwendig werden, dass ein Zug später in einen noch nicht freien Streckenabschnitt einfährt und deswegen langsamer fahren oder warten muss. Unplanmäßiger Gegenverkehr auf dem Nachbargleis kann zu einer Verringerung der momentan zulässigen Höchstgeschwindigkeit auf dem Gleis GL des betreffenden Fahrzeugs FZ führen usw. Es wird ohne weiteres deutlich, dass diese Beschränkungen im Ort und in der Zeit direkte Auswirkungen auf die Geschwindigkeit des betreffenden Fahrzeugs FZ haben und infolgedessen auch Bremsvorgänge notwendig werden lassen können.

In einem vierten Schritt 4 erfolgt die Kontrolle des Fahrzeugs FZ (kurz: CTL-TR). Hierbei geht es um Kontrollmaßnahmen, die streckenseitig durchgeführt werden. Dabei kommen die bereits erwähnten Streckenelemente STE zum Einsatz. Die Kontrolle des Fahrzeugs FZ erfolgt hierbei unter Berücksichtigung des gesamten im Streckennetz erfolgenden Zugverkehrs.

In einem fünften Schritt 5 erfolgt die Ausgabe von Beschränkungen im Ort und in der Zeit, die durch die Kontrolle des Fahrzeugs FZ entstehen (kurz: LIM-OT). Diese können konkret eine Änderung der Geschwindigkeit des Fahrzeugs FZ erforderlich machen. Damit die Änderungen in Ort und Zeit durch die Fahrzeugsteuerung FZ berücksichtigt werden können, werden diese im dritten Schritt und im fünften Schritt ermittelten Beschränkungen im Ort und in der Zeit in die fahrzeugseitige Rechenumgebung RUOB übertragen.

In einem sechsten Schritt 6 erfolgt in der fahrzeugseitigen Rechenumgebung RUOB die Eingabe der Beschränkungen im Ort und in der Zeit, wie vorstehend beschrieben (kurz: LIM-IN). Somit stehen diese in der fahrzeugseitigen Rechenumgebung RUOB zur Verfügung.

In einem siebenten Schritt 7 erfolgt die Ermittlung des vorgegebenen Bremszielpunktes VBP, an dem aufgrund der Beschränkungen im Ort und in der Zeit eine bestimmte Geschwindigkeit durch Bremsen erreicht werden muss (kurz: DEF-VBP). Diese Geschwindigkeit wird als Zielgeschwindigkeit bezeichnet und ist geringer als die momentane Geschwindigkeit des Fahrzeugs FZ (zumindest, wenn dieses keine positive Normalbeschleunigung erfährt - sonst kann die Zielgeschwindigkeit auch höher als die Momentangeschwindigkeit liegen) und kann auch bei null liegen (dies bedeutet, dass das Fahrzeug FZ am vorgegebenen Bremszielpunkt VBP zum Stillstand kommen muss).

In einem achten Schritt 8 erfolgt die Berechnung der oben genannten Zielgeschwindigkeit (kurz: DEF-ZG). Hinsichtlich der Zielgeschwindigkeit und des Bremszielpunktes unterliegt die Steuerung des Fahrzeugs FZ Beschränkungen, die zur Einhaltung der Sicherheitsanforderungen unbedingt zu berücksichtigen sind, beispielsweise die auf dem Streckenabschnitt zulässige Höchstgeschwindigkeit. Die Berücksichtigung dieser Beschränkungen im Ort und in der Zeit erfolgt durch eine Funktionalität des Fahrzeugs FZ, die als ATP (Automatic Train Protection) bezeichnet wird. Weitere Beschränkungen im Ort und in der Zeit können aus der Forderung abgeleitet werden, dass das Fahrzeug FZ möglichst wenig Energie verbrauchen soll. Unter Berücksichtigung des Zeitraums, der für die Bewältigung eines bestimmten Streckenabschnittes benötigt werden darf, soll das Fahrzeug FZ beispielsweise möglichst wenig beschleunigt und möglichst lange rollen gelassen werden. Die Berücksichtigung dieser Beschränkungen im Ort und in der Zeit erfolgt durch eine Funktionalität des Fahrzeugs FZ, die als ATO (Automatic Train Operation) bezeichnet wird.

In einem neunten Schritt 9 erfolgt erfindungsgemäß nun wiederholt die Berechnung des momentan erreichbaren Bremszielpunktes MBP (kurz: CAL-MBP). Eine wesentliche Beschränkung im Ort und Zeit ist hierbei die vorgegebene Bremsbeschleunigung. Diese wird beispielsweise auf ein für Fahrgäste erträgliches Maß festgelegt. Im Interesse einer möglichst energiesparenden Fahrweise kann die Beschränkung im Ort und Zeit auch ein Rollen lassen vorgeben, sodass das Fahrzeug FZ möglichst lange ohne Energiezufuhr rollt.

In einem zehnten Schritt 10 erfolgt eine Abfrage, ob der momentan erreichbare Bremszielpunkt MBP dem vorgegebenen Bremszielpunkt VBP entspricht oder diesen gerade erst überschritten hat (kurz: MBP=VBP?). Eine Überschreitung kann dadurch entstehen, dass die wiederholte Berechnung des momentan erreichbaren Bremszielpunktes MBP eine gewisse Rechenzeit beansprucht. Technisch ist diese Überschreitung aber nicht relevant, da die Rechenzeit bei der Durchführung des neunten Schrittes im Vergleich zur für den Bremsvorgang zur Verfügung stehenden Zeit vernachlässigbar ist. Ist die Abfrage mit "ja" zu beantworten, geht es weiter mit dem elften Schritt. Ansonsten erfolgt eine Rekursion zum neunten Schritt.

In einem elften Schritt 11 erfolgt das Setzen des Bremseinsatzpunktes (kurz: SET-BEP). Dieser liegt dort, wo sich das Fahrzeug FZ im Augenblick befindet. Mit anderen Worten wird erfindungsgemäß sofort mit dem Bremsen begonnen.

In einem zwölften Schritt 12 erfolgt die Steuerung der Bremse (kurz: CTL-BRK). Diese wird in an sich bekannter Weise derart gesteuert, dass das Fahrzeug FZ am vorgegebenen Bremszielpunkt VBP die vorgegebene Zielgeschwindigkeit erreicht.

In einem 13. Schritt 13 erfolgt eine Abfrage, ob das Verfahren beendet werden soll (kurz: STP?). Dies ist nur schematisch dargestellt und gilt sowohl für die streckenseitige Rechenumgebung RUTS als auch die fahrzeugseitige Rechenumgebung RUOB. Die Beendigung des Verfahrens für das betreffende Fahrzeug FZ erfolgt normalerweise, wenn dessen Betrieb beispielsweise in einem Fahrzeugdepot FZ beendet wird. Dann geht es weiter mit dem 14. Schritt. Ansonsten erfolgt eine Rekursion zum sechsten Schritt bzw. zweiten Schritt. In einem 14. Schritt 14 erfolgt ein Beenden des Verfahrens (kurz: STOP).

Bezugszeichenliste

| | |
|---|---|
| AT | Antennen |
| AZ | Achszähler |
| BL | Balise |
| BU | Bahnumgebung |
| CP1 | erster Computer |
| CP2 | zweiter Computer |
| CP3 | dritter Computer |
| CP4 | vierter Computer |
| CTL | Controller |
| FZ | Fahrzeug |
| GL | Gleis |
| LZ | Leitzentrale |
| MBP | momentan erreichbarer Bremszielpunkt |
| PR1 | erster Prozessor |
| PR2 | zweiter Prozessor |
| PR3 | dritter Prozessor |
| PR4 | vierter Prozessor |
| RU | Rechenumgebung |
| RUOB | fahrzeugseitige Rechenumgebung |
| RUTS | streckenseitige Rechenumgebung |
| S1 | erste Schnittstelle |
| S10 | zehnte Schnittstelle |
| S11 | elfte Schnittstelle |
| S12 | zwölfte Schnittstelle |
| S13 | 13. Schnittstelle |
| S14 | 14. Schnittstelle |
| S2 | zweite Schnittstelle |
| S3 | dritte Schnittstelle |
| S4 | vierte Schnittstelle |
| S5 | fünfte Schnittstelle |
| S6 | sechste Schnittstelle |

| S7 | siebente Schnittstelle |
|----|----|
| S8 | achte Schnittstelle |
| SE1 | erste Speichereinheit |
| SE2 | zweite Speichereinheit |
| SE3 | dritte Speichereinheit |
| SE4 | vierte Speichereinheit |
| SG | Lichtsignal |
| SN | Sensor |
| STE | Streckenelement |
| STL | Satellit |
| STW | Stellwerk |
| VBP | vorgegebenen Bremszielpunkt |
| WA | Weichenantrieb |

**Patentansprüche**

1. Verfahren zum Steuern eines Fahrzeugs (FZ), bei dem

   a)
   für eine vorgegebene Zielgeschwindigkeit in einem vorgegebenen Bremszielpunkt (VBP) das Erreichen eines Bremseinsatzpunktes rechnergestützt unter Berücksichtigung von Beschränkungen im Ort und Beschränkungen in der Zeit bestimmt wird,
   b)

      das Fahrzeug (FZ) derart gesteuert wird, dass dieses bei Erreichen des vorgegebenen Bremseinsatzpunktes in einem Bremsvorgang bis zum Erreichen der vorgegebenen Zielgeschwindigkeit abgebremst wird,
      **dadurch gekennzeichnet,**
      **dass** wiederholt die beiden folgenden Schritte durchgeführt werden, dass

   c)
   rechnergestützt ein momentan erreichbarer Bremszielpunkt (MBP) unter Berücksichtigung der Beschränkungen im Ort und Beschränkungen in der Zeit bestimmt wird,
   d)
   danach rechnergestützt das Erreichen des Bremseinsatzpunktes bestimmt wird, indem geprüft wird, ob der momentan erreichbare Bremszielpunkt (MBP) dem vorgegebenen Bremszielpunkt (VBP) entspricht,
   e)
   und **dass**, sobald der momentan erreichbare Bremszielpunkt (MBP) dem vorgegebenen Bremszielpunkt (VBP) entspricht, Schritt b) eingeleitet wird.

2. Verfahren nach Anspruch 1, **dadurch gekennzeichnet, dass**
   im Schritt c) gemäß Anspruch 1 der momentan erreichbare Bremszielpunkt (MBP) anhand von aus dem Weg-Zeit-Gesetz abgeleiteten Bewegungsgleichung für das Fahrzeug (FZ) berechnet wird.

3. Verfahren nach einem der Ansprüche 1 oder 2, **dadurch gekennzeichnet, dass** ein Summand, der einen beim Bremsvorgang auftretenden Ruck beschreibt, in der Bewegungsgleichung berücksichtigt wird.

4. Verfahren nach einem der vorhergehenden Ansprüche, **dadurch gekennzeichnet, dass** als Beschränkung im Ort eine maximale Haftung der Räder des Fahrzeugs (FZ) auf dem Untergrund und/oder ein Widerstandsgradient für die Bewegung des Fahrzeugs (FZ) berücksichtigt wird.

5. Verfahren nach einem der vorhergehenden Ansprüche, **dadurch gekennzeichnet, dass** als Beschränkung in der Zeit eine maximal mögliche Leistung bei der Rückspeisung von Energie oder beim Bremsen des Fahrzeugs (FZ) berücksichtigt wird.

6. Fahrzeug mit einer fahrzeugseitigen Rechenumgebung (RUOB), zur Steuerung des Fahrzeugs (FZ) **dadurch gekennzeichnet, dass** die fahrzeugseitige Rechenumgebung (RUOB) dazu eingerichtet ist, zumindest die Schritte a), c), und d) des Verfahrens nach einem der Ansprüche 1 - 5 durchzuführen.

7. Fahrzeug nach Anspruch 6, **dadurch gekennzeichnet, dass** das Fahrzeug (FZ) ein spurgeführtes Fahrzeug (FZ) ist.

8. Computerprogrammprodukt, enthaltend Programmbefehle, die durch eine Rechenumgebung (RU) ausführbar sind, derart, dass zumindest die Schritte a), c) und d) des Verfahrens nach einem der Ansprüche 1 - 5 ausgeführt werden.

9. Computerlesbares Speichermedium, enthaltend Daten, welche als Datensätze vom Speichermedium gespeichert werden, derart, dass die Datensätze das Computerprogrammprodukt nach dem letzten voranstehenden Anspruch ausführbar machen.

## FIG 1

BU

RUTS

STL

AT

LZ

S3

S4

AT

S2

S1

SG

FZ

AT

STW

S5

W

RUOB

S6

GL

S7

S8

CTL

BL

AZ

GL

WA

FIG 2

# FIG 3

# FIG 4

RUOB | RUTS

```
1 — ( START )                          ( START ) — 1

6 — [ LIM - IN ] ←──────────────┐

7 — [ DEF - VBP ]               [ CTL - TT ] — 2

8 — [ DEF - ZG ]                [ LIM - OT ] — 3

9 — [ CAL - MBP ]                           CP2

10 — < MBP = VBP? > —           [ CTL - TR ] — 4

              +                  [ LIM - OT ] — 5
11 — [ SET - BEP ]                          CP4

12 — [ CTL - BRK ]

13 — < STP? >                    < STP? > — 13
        −                          −
        +                          +

14 — ( STOP )                    ( STOP ) — 14
```

CP1

EUROPÄISCHES PATENTAMT
European Patent Office
Office européen des brevets

## EUROPÄISCHER RECHERCHENBERICHT

Nummer der Anmeldung

EP 24 22 1755

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2024/278816 A1 (WANG XUCHAO [CN] ET AL) 22. August 2024 (2024-08-22) * Fig. 1-3; Abs. [0002]-[0007], Ansprüche 1-13 * ----- | 1,2,4-9 | INV. B60T7/12 B60T8/17 B60T8/172 B60T8/174 |
| X | US 11 491 959 B2 (SUBARU CORP [JP]) 8. November 2022 (2022-11-08) * Fig. 4-6; Ansprüche 1-4 * ----- | 1,4-6,8,9 | B60T8/32 |
| A | US 2014/032023 A1 (KUMAR AJITH KUTTANNAIR [US] ET AL) 30. Januar 2014 (2014-01-30) * das ganze Dokument * ----- | 1-9 | |

RECHERCHIERTE SACHGEBIETE (IPC)

B60T

Der vorliegende Recherchenbericht wurde für alle Patentansprüche erstellt

| Recherchenort | Abschlußdatum der Recherche | Prüfer |
|---|---|---|
| München | 19. Mai 2025 | Kirov, Youlian |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 24 22 1755

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-05-2025

| Im Recherchenbericht angeführtes Patentdokument | Datum der Veröffentlichung | Mitglied(er) der Patentfamilie | Datum der Veröffentlichung |
|---|---|---|---|
| US 2024278816 A1 | 22-08-2024 | CN 113879368 A | 04-01-2022 |
| | | EP 4180302 A1 | 17-05-2023 |
| | | US 2024278816 A1 | 22-08-2024 |
| | | WO 2023050527 A1 | 06-04-2023 |
| US 11491959 B2 | 08-11-2022 | CN 113183958 A | 30-07-2021 |
| | | JP 7413030 B2 | 15-01-2024 |
| | | JP 2021109575 A | 02-08-2021 |
| | | US 2021213919 A1 | 15-07-2021 |
| US 2014032023 A1 | 30-01-2014 | CN 103415425 A | 27-11-2013 |
| | | US 2014032023 A1 | 30-01-2014 |
| | | US 2016016566 A1 | 21-01-2016 |
| | | WO 2012092557 A2 | 05-07-2012 |
| | | ZA 201305666 B | 28-01-2015 |

EPO FORM P0461

Für nähere Einzelheiten zu diesem Anhang : siehe Amtsblatt des Europäischen Patentamts, Nr.12/82